# EUROPÄISCHE PATENTANMELDUNG

(11) **EP 1 493 997 A2**
(43) Veröffentlichungstag der Anmeldung: **05.01.2005**
(21) Anmeldenummer: 04011615.4
(22) Anmeldetag: 15.05.2004
(51) Int. Cl.: G01D 18/00

(54) **Verfahren und Vorrichtung zur Sicherung der Qualität der Messwertaufnahme eines Sensors**

(30) Priorität: 04.07.2003 DE 10330251
(71) Anmelder: ROBERT BOSCH GMBH, 70442 Stuttgart (DE)
(72) Erfinder: Krauter, Michael, 74321 Bietigheim-Bissingen (DE); Moerbe, Matthias, 74360 Ilsfeld-Helfenberg (DE); Hofsaess, Michael, 71665 Vaihingen/Enz (DE); Fluck, Tobias, 87509 Immenstadt (DE); Meder, Klaus, 71636 Ludwigsburg (DE); Muehlbeyer, Peter, 74360 Ilsfeld (DE); Knecht, Timo, 74385 Pleidelsheim (DE)

(57) **Zusammenfassung**

Bei der vorliegenden Erfindung handelt es sich um ein Verfahren und eine Vorrichtung, mit dessen Hilfe eine Messwertaufnahme mittels wenigstens eines Sensors und eines wenigstens den einen Sensor steuernden Steuergeräts stattfindet. Dabei erfasst der Sensor Messgrößen und leitet die so erfassten Messgrößen an das separate, vom Sensor baulich getrennte Steuergerät weiter. Der Kern der Erfindung besteht nun darin, dass der Sensor in Abhängigkeit von den im Steuergerät erfassten Messgrößen angesteuert wird. Zu unterscheiden ist dabei, ob es sich um momentane, d.h. aus der aktuellen Messwertaufnahme, oder um vorhergehende, d.h. aus früheren Messwertaufnahmen stammende, Messwertgrößen handelt. Weiterhin ist auch denkbar, dass eine Priorisierung der zeitlichen Rangfolge der Messwerterfassung durchgeführt wird und in Abhängigkeit von dieser Bewertung der Messgrößen die Ansteuerung des Sensors gewählt wird.

## Beschreibung

### Stand der Technik

Die Erfindung betrifft ein Verfahren und eine Vorrichtung sowie ein Computerprodukt bzw. ein Computerprogramm zur Messwertaufnahme in einem Fahrzeug mittels eines Sensors und eines den Sensor steuernden Steuergeräts. Dabei erfolgt die Ansteuerung des Sensors in Abhängigkeit von den erfassten Messgrößen im Steuergerät.

In den heutigen Fahrzeugsystemen findet sich eine Vielzahl von Systemen, die dem Fahrer eine fahrunterstützende und/oder fahrstabilisierende Funktion anbieten. Durch ausgeklügelte Systeme wie beispielsweise einem Antiblockiersystem (ABS) kann so schon durch die Feststellung einer geringen Radgeschwindigkeitsänderung auf die Haftung zwischen Reifen und Fahrbahn geschlossen werden. Um solche Systeme noch weiter zu verbessern, ist es deshalb notwendig, die für die Funktionen erforderlichen Betriebsdaten eines Fahrzeugs wie beispielsweise Druck, Temperatur, Geschwindigkeit, etc. mit einer hohen Genauigkeit zur erfassen.

Der Stand der Technik liefert dazu mehrere Möglichkeiten, wie die zur Aufnahme der Betriebsdaten bzw. Messwerte dienenden Sensoren kalibriert werden können. Eine Möglichkeit besteht darin, dass die Sensoren nach deren Fertigstellung auf vorgegebene Soll-Werte kalibriert werden, um die geforderte Genauigkeit der Messwerte beim späteren Einsatz des Sensors zu erhalten. Da bei der Herstellung aufgrund einzelner toleranzbehafteter Fertigungsschritte unterschiedliche Genauigkeiten bei den Sensoren auftreten können, werden die Sensoren nach der Fertigstellung üblicherweise einem Kalibrierverfahren unterworfen, bei dem durch wiederholte Mess- und Kalibriervorgänge die Messtoleranzen so eingeengt werden, dass der vorgegebene Zielwert erreicht wird. Die dazu erforderlichen Arbeitsgänge wie Prüfen, Kalibrieren, Prüfen, etc. sind jedoch sehr zeit- und kostenaufwendig und insbesondere für eine Massenanfertigung nicht tolerierbar.

Einer der sensorindividuellen Abweichungen bei der Herstellung betrifft den statischen Offsetfehler, d.h. der Nullpunkt bei den hergestellten Sensoren wird nicht zuverlässig angezeigt und weist für jeden Sensor einen leicht unterschiedlichen Wert auf. Dieser Offsetfehler führt dazu, dass der Messwert, der durch die Sensoren erfasst wird, teilweise große Abweichungen zu den tatsächlichen Werten aufweisen kann.

Bei einfachen selbstkalibrierenden Meßsystemen wird, beim Auftreten unbestimmter Offsetgrößen, das Meßsystem zur Kalibrierung mit zwei Referenzwerten der Messgröße beaufschlagt. Dazu muss die Messgröße abgeschalten werden und der durch Abschalten der Messgröße ermittelte Nullpunkt wird als Referenzwert und ein zusätzlich zur Messgröße aufgegebener Referenzwert zur Kalibrierung genutzt.

Ein Verfahren zur Minimierung des Offset-Fehlers wird in der DE 100 03 906 A1 vorgeschlagen. Dabei wird in einem Messbereich, in dem der Drucksensor den größten Offset-Fehler aufweist, der Referenzdruck mit einer höheren Genauigkeit bestimmt, als der Sensordruck durch den Drucksensor gemessen werden kann. Wenn dann die Sensorkennlinie derart korrigiert wird, dass die Differenz aus Differenzdruck und Sensordruck minimiert, vorzugsweise gleich Null gesetzt, wird, kann davon ausgegangen werden, dass der kalibrierte Drucksensor eine höhere Messgenauigkeit aufweist als ein Drucksensor mit nicht adaptierter Sensorkennlinie.

Weiterhin ist aus der DE 39 43 386 A1 ein Verfahren bekannt, bei dessen Anwendung die Messgröße ständig am Eingang des Messsystems anliegen kann, das aber trotzdem die Ermittlung und Korrektur messwertverfälschender driftender Offsetgrößen ermöglicht. Hierzu wird ein Teilübertragungsfaktor definiert variiert, die zugehörigen Messwerte aufgenommen und diese zur sensorinternen Messwertkorrektur benutzt.

Ein weiteres selbstkalibrierendes Meßsystem ist aus der DE 100 64 859 A1 bekannt. Dabei wird die Kalibrierungsschaltung mit einem Hilfssensor, einem Rechenwerk und einem Parameterspeicher zusammen mit dem Sensor in einem Chip integriert. Bei der Erst-Inbetriebnahme des Meßsystems wird dabei ein Kalibriervorgang gestartet, welcher Kalibrierungspunkte eines temperaturabhängigen Kennlinienfeldes aufnimmt und einige kennliniencharakteristische Kalibrierungspunkte in dem Parameterspeicher des Hilfssensors abspeichert.

### Vorteile der Erfindung

Bei der vorliegenden Erfindung handelt es sich um ein Verfahren und eine Vorrichtung, mit dessen Hilfe eine Messwertaufnahme mittels wenigstens eines Sensors und eines wenigstens den einen Sensor steuernden, insbesondere prüfenden, Steuergeräts stattfindet. Dabei erfasst der Sensor Messgrößen und leitet die so erfassten Messgrößen an das separate, vom Sensor baulich getrennte, Steuergerät weiter. Der Kern der Erfindung besteht nun darin, dass der Sensor in Abhängigkeit von den im Steuergerät erfassten Messgrößen angesteuert bzw. geprüft und/oder kalibriert wird. Zu unterscheiden ist dabei, ob es sich um momentane, d.h. aus der aktuellen Messwertaufnahme, oder um vorhergehende, d.h. aus früheren Messwertaufnahmen, stammende Messwertgrößen handelt. Weiterhin ist auch denkbar, dass eine Priorisierung der zeitlichen Rangfolge der Messwerterfassung durchgeführt wird und in Abhängigkeit von dieser Bewertung der Messgrößen die Ansteuerung des Sensors gewählt wird. In einer besonderen Ausgestaltung der Erfindung sind mit dem Steuergerät unterschiedliche Betriebsmodi des Sensors möglich. So lassen sich neben dem normalen Messbetrieb auch eigenständige Prüf-, Test- und Kalibrierungsmodi im Steuergerät unterbringen.

Ein Vorteil in der baulichen Trennung des Sensors und des Steuergeräts liegt darin, dass die separate Bauweise eine geringere Komplexität des Systems erfordert und somit eine geringere Störanfälligkeit aufweist. Weiterhin erlaubt die bauliche Trennung im Falle eines Defekts, dass lediglich die betroffenen Bauteile ausgetauscht werden müssen. Zusammen mit der vorliegenden Erfindung kann dabei bei einem Austausch der Bauteile eine wesentliche Reduzierung der Sensorempfindlichkeit vermieden werden.

Durch die in den abhängigen Ansprüchen aufgeführten Maßnahmen sind vorteilhafte Weiterbildungen und Verbesserungen der im Hauptanspruch angegebenen Steuerschaltung möglich. Besonders vorteilhaft ist die Möglichkeit, die Messwertaufnahme durch eine Kalibrierung des Sensors zu optimieren. Dabei ist vorgesehen, den Kalibrierungsvorgang des Sensors in wenigstens zwei Schritten zu unterteilen. Im ersten Schritt wird eine Grobkalibrierung durchgeführt, die durch eine geeignete Beschaltung des Sensors oder des Operationsverstärkers, der zur Verstärkung der Ausgangssignale des Sensors verwendet wird, einen groben Abgleich erzeugt. Neben der Beschaltung des Sensors kann auch eine geeignete Wahl der Ansteuerung durch das Steuergerät genutzt werden, um einen Grobabgleich zu erreichen. Der Grobabgleich des Sensors mittels der Ansteuerung durch das Steuergerät stützt sich dabei auf abgespeicherte Betriebsparameter. Im zweiten Schritt der Kalibrierung werden dagegen die im Steuergerät erfassten Messgrößen, die sich infolge der Durchführung des ersten Kalibrierungsschrittes durch den Sensor erfassen lassen, dazu verwendet, die Kalibrierung des Sensors zu optimieren. Mit dieser zweistufigen Kalibrierung können somit Unterschiede der Sensoren hinsichtlich ihrer Betriebsparameter, beispielsweise Offset und Verstärkung, die sich aufgrund der toleranzbehafteten Fertigungsschritte der Herstellung ergeben haben, ausgeglichen werden, indem die Steuerung an die individuelle reale Ausgestaltung des Sensors angepasst wird. Neben den Toleranzen der Sensoren können in diesem zweiten Kalibrierungsschritt auch die Herstellungstoleranzen der übrigen im Messpfad vorhandenen Bauteile berücksichtigt und kompensiert werden.

Eine Weiterbildung der Erfindung sieht vor, dass mit dem Sensor wenigstens eine Druckgröße erfasst wird, die einen Druck repräsentiert. Dabei ist insbesondere vorgesehen, den Druck innerhalb einer Bremsanlage eines Fahrzeugs zu erfassen.

Besonders vorteilhaft wirkt sich bei der vorliegenden Erfindung aus, dass neben der Ansteuerung des Sensors durch das Steuergerät, die Messgrößen vom Sensor an das Steuergerät weitergeleitet werden und innerhalb des Steuergeräts verarbeitet werden können.

Eine besondere Ausgestaltung der Erfindung sieht vor, dass die Kalibrierung zu wenigstens einem vorgebbaren Zeitpunkt gestartet werden kann. Dies kann beispielsweise durch eine direkte Kalibrierungsanforderung des Servicetechnikers während eines Werkstattaufenthalts oder durch einen Techniker bei der Herstellung des Systems Sensor-Steuergerät geschehen. Weiterhin ist denkbar, dass das System Sensor-Steuergerät eigenständig eine Notwendigkeit zur Kalibrierung erkennt und die Kalibrierung zu einem vorgegebenen Zeitpunkt startet. Die Notwendigkeit zur Kalibrierung kann dabei beispielsweise dadurch entstehen, dass das Steuergerät erkennt, dass noch keine Kalibrierung des Sensors stattgefunden hat. Dies tritt regelmäßig bei einer Neuinstallation bzw. Austausch eines der Bauteile des Systems auf.

Vorteilhafterweise wird zur Kalibrierung des Sensors wenigstens die Erfassung einer Messgröße vorgesehen. Dies ist insbesondere erforderlich, um im zweiten Kalibrierungsschritt einen Referenzwert zu bilden, der durch diese Messgröße repräsentiert wird.

Weiterhin ist in einer besonderen Varianten der Erfindung vorgesehen, dass die Ansteuerparameter bspw. Betriebs- und Testparameter, die im zweiten Kalibrierungsschritt anhand der erfassten Messgrößen erzeugt werden, in einem nicht flüchtigen Speicher abgelegt werden. Dabei besteht sowohl die Möglichkeit, die Ansteuerparameter in einem Speicher am bzw. im Sensor als auch im Steuergerät abzuspeichern. So kann beispielsweise nach dem Austausch des Steuergeräts durch die Abspeicherung der Ansteuerparameter im Sensor ein Zugriff auf die sensorindividuellen Parameter ermöglicht werden.

In einer Ausgestaltung der Erfindung befindet sich innerhalb des Steuergeräts wenigstens ein Analog/Digital Wandler und ein Mikroprozessor. Mittels des Analog/Digital Wandlers können so die Messgrößen des Sensors aufgenommen und mit Hilfe des Mikroprozessors verarbeitet werden. Neben der Weiterleitung der verarbeiteten Messgrößen kann der Mikroprozessor weiterhin dazu genutzt werden, in Abhängigkeit von den erfassten Messgrößen die Ansteuerung des Sensors zu modifizieren. Ein weiterer Vorteil bei der Verwendung eines Analog/Digital Wandlers und eines Mikroprozessors im Steuergerät liegt darin, dass bei der durchgeführten Kalibrierung der gesamte Messpfad, d.h. Aufnahme und Verarbeitung gemeinsam abgeglichen werden kann. Somit sind alle Bauteile, die sich im Messpfad befinden, beispielsweise Messkopf, Datenleitung, A/D Wandler, etc, mit dem Abgleich abgedeckt. Alle zum Abgleichzeitpunkt bestehenden Bauteiletoleranzen werden durch den Abgleich kompensiert.

Besonders vorteilhaft lässt sich die Erfindung in einem Computerprogramm verwenden. Dabei kann die Aufnahme der Messgrößen und die Abstimmung des Sensors durch das Computerprogramm weitgehend automatisiert werden. So ist nach dem Einbau eines neuen Sensors oder des Austausches des Steuergeräts eine automatische Erkennung der neuen Sensor-Steuergerät Verbindung möglich, die den Abstimmungsvorgang startet. Weiterhin sind durch kurz aufeinander folgenden Schritte der Abstimmung, wie sie beispielsweise durch die Programmschritte innerhalb des Computerprogramms realisiert werden, eine zeitlich Verkürzung der Abstimmung möglich.

In einer weiteren Ausgestaltung der Erfindung wird der Algorithmus, mit dem der Sensor durch das Steuergerät abgestimmt wird, inklusive der Erkennung einer neuen Sensor-Steuergerät Verbindung, vorteilhafterweise auf einem Computerprogrammprodukt genutzt. Dabei kann es sich beispielsweise um einen Datenträger handeln, der dazu verwendet wird, dass das Verfahren durchführende Computerprogramm zu speichern. Von diesem computerlesbaren Datenträger kann ein Computer oder eine entsprechende Recheneinheit das Computerprogramm zu Beginn einer Initialisierung ausgelesen und gestartet werden. Typischerweise wird die Initialisierung bei der Erst-Montage des Systems aus Sensor und Steuergerät oder bei einem Austausch eines der Bauteile während eines Werkstattaufenthalts durchgeführt.

Im Vergleich zu herkömmlichen Sensor-Steuergerät Systemen, bei denen der Sensor eine eigenständige Eigendiagnosemöglichkeit besitzt, kann durch die in der vorliegenden Erfindung zweigeteilte Kalibrierung auf kostenintensive Speziaibauteile wie einen ASIC pro Sensorkanal verzichtet werden. Vielmehr können standardmäßige Operationsverstärker mit geringer Offsetspannung und niedriger Drift zur Verstärkung der Signale eines Sensors genutzt werden. Darüber hinaus wird durch die Verwendung standardmäßiger Bauteile gegenüber komplexeren Spezialbauteile die Fehleranfälligkeit beim Betrieb des Sensors reduziert. Weiterhin kann der aufwändige Abgleich der gängigen Sensoren durch die Zweiteilung vermieden werden. Ein Abgleich der vorgestellten Art findet somit deutlich schneller statt.

Weitere Ausgestaltungen sind den Unteransprüchen zu entnehmen.

### Zeichnungen

Die Erfindung wird nachstehend anhand der in den Zeichnungen dargestellten Ausführungsformen erläutert. Figur 1 zeigt in einem Blockschaltbild ein System bestehend aus messwerterfassenden Sensor und sensorsteuerndem Steuergerät. Das Flussdiagramm in Figur 2 stellt schematisch die Schritte dar, die bei der Kalibrierung wenigstens eines Sensors durchgeführt werden. Figur 3 zeigt eine Übersicht, über den zweigeteilten Kalibrierungsvorgang.

### Ausführungsbeispiel

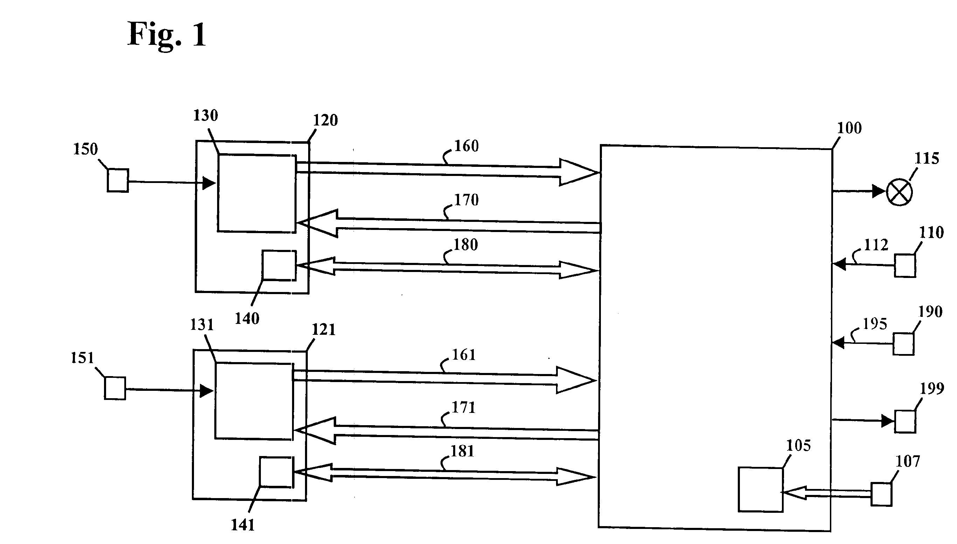

In Figur 1 ist ein mögliches Ausführungsbeispiel der vorliegenden Erfindung abgebildet. Dabei ist in einem Block 100 ein Steuergerät dargestellt, welches wenigstens einen Sensor 120 in oder an einem Fahrzeug ansteuert und die vom Sensor 120 erzeugten Messwerte 160 verarbeitet. Wie in der Figur 1 angedeutet, ist in einem weiteren Ausführungsbeispiel die Erweiterung auf mehrere Sensoren 121, etc. denkbar. Jedoch wird im Rahmen des vorliegenden Ausführungsbeispiels die Darstellung der Erfindung anhand der Figur 1 lediglich auf die Ansteuerung und die Aufnahme bzw. Verarbeitung der Messwerte 160 eines Sensors 120 beschränkt. Weiterhin soll im folgenden davon ausgegangen werden, dass es sich bei dem Sensor 120 um einen Drucksensor innerhalb eines Bremssystems eines Fahrzeugs handelt. In weiteren Ausführungsformen kann jedoch davon ausgegangen werden, dass es sich bei dem Sensor auch um einen anderen, nicht den Druck messenden Sensor insbesondere außerhalb des Bremssystems handeln kann. Beispielsweise kann mit dem Sensor 120 die Temperatur der Bremsflüssigkeit der Bremsanlage des Fahrzeugs überwacht werden. Aber auch die Überwachung der Fahrgeschwindigkeit, der Reifendrehzahl oder des Reifenluftdrucks ist denkbar. Innerhalb des Sensors 120 befindet sich der eigentliche Messkopf 130, mit dem die Messwerte aufgenommen werden können. Diese Messwerte können von einem beliebig zu überwachenden System 150 stammen. Zur Aufnahme von Messwerten wird der Sensor 120, insbesondere der Messkopf 130, durch Steuersignale 170 vom Steuergerät 100 angesteuert. Die notwendigen Steuersignale 170 zur Ansteuerung des Sensors 120 erhält das Steuergerät 100 aufgrund von sensorindividuellen Betriebs- und/oder Ansteuerparameter, die in einem im Steuergerät 100 befindlichen Speicher 105, beispielsweise in Form eines EEPROM-Speicherbausteins, oder in einem im Sensor 120 befindlichen Speicher 140 abgelegt sind. Dabei spielt es für die Ansteuerung des Sensors keine Rolle, ob der Speicher mit den Betriebs- und/oder Ansteuerparameter im Sensor oder Alternativ dazu im Steuergerät untergebracht ist. Die im Speicher 105 abgespeicherten sensorindividuellen Betriebs- und/oder Ansteuerungsparameter können dabei von externen Speicherzugriffen beispielsweise während eines Werkstattaufenthalts 107 oder als Ergebnis einer Modifikation der Ansteuerung aufgrund von vorhergehenden Kalibrierungsvorgängen stammen. Ebenso wie die Betriebs- und/oder Ansteuerungsparameter im Speicher 105 des Steuergeräts 100 können sich die Parameter 180 in einer weiteren Ausführungsform im Speicher 140 des Sensors 120 auf ursprüngliche Betriebsdatensätze des Sensors oder auf eine modifizierte Ansteuerung aus vorhergehenden Kalibrierungsvorgängen beziehen.

Die Messwerte die aufgrund der Ansteuerung des Sensors vom überwachten System 150 im Sensor 120 aufgenommen werden, werden anschließend über eine separate Leitung 160 an das Steuergerät 100 weitergeleitet, welches neben der Sensorsteuerung auch die Verarbeitung der Messwerte übernimmt.

Mit Hilfe geeigneter Testsignale und Plausibilitätsüberlegungen kann festgestellt werden, ob der durch das Steuergerät angesteuerte Sensor 120 einen durch die Ansteuerung nicht zu kompensierenden Fehler aufweist. In diesem Fall kann der Fahrer über eine Anzeige 115 akustisch und/oder optisch auf den fehlerhaften Sensor bzw. den Ausfall aufmerksam gemacht werden. Die Charakteristika dieser Testsignale sind in einem bevorzugten Ausführungsbeispiel im Speicher 105 des Steuergeräts 100 abgespeichert. Dies erlaubt beim Austausch eines der Bauteile eine gleichbleibende Kalibrierung des Systems.

Wird ein Sensor 120 und/oder das Steuergerät 100 ausgetauscht, beispielsweise nach einer erkannten Fehlfunktion, so kann beispielsweise in einem Serviceaufenthalt in einer Werkstatt die Neukalibrierung des Systems Sensor-Steuergerät durch eine Kalibrierungsanforderung 110 neu durchgeführt werden. Diese Kalibrierungsanforderung kann beispielsweise durch ein gesetztes Flag F_{I} (112), d.h. F_{I}=1 dargestellt werden. Die dabei zur Kalibrierung notwendigen Referenzwerte 195 können durch eine externe Eingabe 190 ins Steuergerät 100 eingebracht und abgespeichert werden.

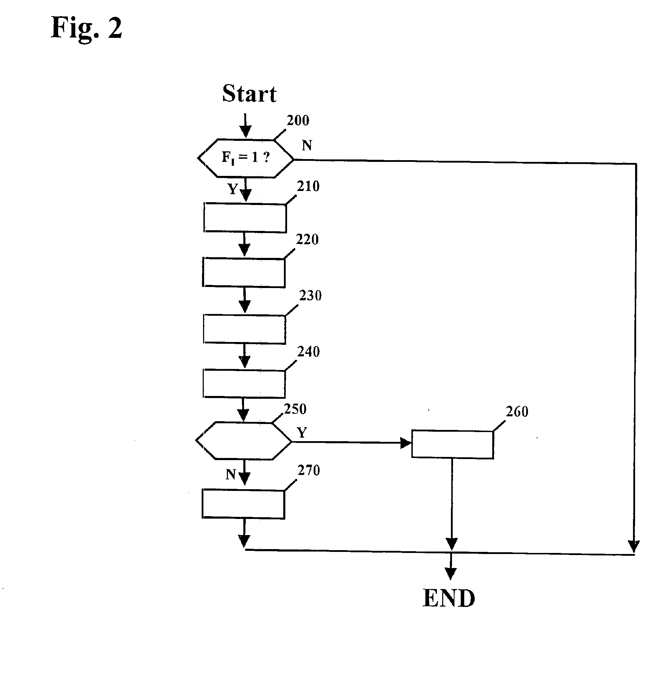

Mit dem Flussdiagramm in Figur 2 wird die Durchführung der Kalibrierung dargestellt, wie sie für das vorliegenden Ausführungsbeispiel vorgesehen ist. Nach dem Start des Algorithmus wird in einem ersten Schritt 200 die Kalibrieranforderung über das Flag F_{I} (112) abgefragt. Bei einem gesetzten Flag F_{I} (112), d.h. F_{I}=1 wird der Algorithmus weiter mit Schritt 210 abgearbeitet. Ist jedoch kein gesetzten Flag F_{I} (112), d.h. F_{I}=0 vorhanden, so wird der Algorithmus unmittelbar beendet. Alternative zu Schritt 200 kann jedoch das Programm auch aktiv durch eine externe Kalibrierungsanforderung 110 direkt gestartet werden. Dies kann beispielsweise durch eine Aktivierung am Ende des Herstellungsprozesses des Systems Sensor-Steuergerät bzw. des Fahrzeugs, sowie bei einem Austausch eines Sensors und/oder Steuergeräts erfolgen.

Im Schritt 210 werden die Betriebs- bzw. Ansteuerungsparameter zur Steuerung des Sensors eingelesen. Dies kann je nach Ausführungsform des Sensors und des Steuergeräts sensornah aus dem Speicher 140 oder sensorfern aus dem Speicher 105 erfolgen. Anschließend wird in Schritt 220 aufgrund der so eingelesenen Betriebs- bzw. Ansteuerparameter ein erster Kalibrierungsschritt durchgeführt. Da es bei der Herstellung der Sensoren zu geringfügigen sensorindividuellen Unterschieden kommen kann, sind die allgemeingültigen Betriebsparameter zur Ansteuerung eines Sensortyps nicht optimal gewählt. Aus diesem Grund kann in einem ersten Kalibrierungsschritt mit den allgemeinen Betriebsparametern, die aufgrund des Sensortyps zur Ansteuerung gewählt werden, lediglich ein Grobabgleich des Sensors durchgeführt werden, ohne auf seine individuelle Eigenschaften Rücksicht zu nehmen. Mit Hilfe der sensortypischen Betriebsparameter wird somit der Offset grob auf Null abgeglichen, sowie die Verstärkung entsprechend eingestellt.

Dieser Grobabgleich im ersten Kalibrierungsschritt kann dabei auf zwei unterschiedliche Arten erfolgen. In einem Ausführungsbeispiel wird der Grobabgleich über die Ansteuerung des Sensors 120 durch das Steuergerät 100 mit den abgespeicherten Betriebs- und Ansteuerparametern im Schritt 220 durchgeführt. Bei einem weiteren Ausführungsbeispiel wird dieser Schritt 220 des Algorithmus jedoch nicht ausgeführt. Vielmehr wird der Grobabgleich im ersten Kalibrierungsschritt direkt über eine geeignete Beschaltung des Sensors 120 unabhängig von der Ansteuerung durch das Steuergerät 100 erreicht. Dies hat den Vorteil, dass zwei voneinander unabhängige Kalibrierungsvorgänge genutzt werden können.

Durch die Ansteuerung des Sensors 120 in Schritt 220 können im Schritt 230 Messwerte des überwachten Systems 150 erfasst werden. Mit Hilfe von vordefinierten Referenzbedingungen und Testsignalen, die im überwachten System 150 realisiert werden, kann die Kalibrierung in einem zweiten Kalibrierungsschritt optimiert werden. Im vorliegenden Ausführungsbeispiel werden dafür an die Sensoren wenigstens zwei Referenzdrücke mit 0 und 100 bar angelegt. Die dabei erfassten Messwerte 160 werden im Steuergerät 100 in entsprechende Ist-Druckwerte umgerechnet und mit den Referenzwerten in Form der Soll-Druckwerte 195 einer externen Eingabe 190 verglichen. Eine ähnliche Vorgehensweise wird mit definierten Testsignalen erreicht. So können die Testsignale dem eigentlichen Messsignal positiv oder negativ überlagert werden und anhand der erfassten Messwerte auf Verstärkungsfehler oder Alterungseffekte geschlossen werden.

Die aufgrund der Referenzwerte und Testsignale ermittelte Differenz zwischen Soll- und Ist-Werten der Messwerte, kann als Grundlage zum optimalen Abgleich der Ansteuerung des Sensors verwendet werden. Durch die druckproportionale Ausgangsspannung des Sensors kann somit eine Modifikation der Ansteuerungsparameter erfolgen.

Im Vergleich zum Grobabgleich in Schritt 220 bzw. durch die Beschaltung des Sensors 120 wird bei dem zweiten Kalibrierungsschritt ein Feinabgleich durchgeführt, wobei die geänderten Ansteuerungsparameter zur Korrektur des Offsets und/oder der Verstärkung des Sensors 120 verwendet werden. Dieser zweite Kalibrierungsschritt erfolgt beispielsweise bei der Herstellung des Systems Sensor-Steuergerät am Bandende, d.h. bei der Fertigstellung des Systems Sensor-Steuergeräts. Darüber hinaus besteht, wie erwähnt, die Möglichkeit, mit einem definierten Testsignal (z.B. 0,15 V), das dem eigentlichen Messsignal positiv oder negativ überlagert wird, Verstärkungsfehler, Alterungseffekte und/oder Offsetfehler festzustellen und zu korrigieren. Auch eine konkrete Abfrage des Sensors 120 hinsichtlich möglicher Bondabrissen an den elektrischen Kontaktierungen ist denkbar.

Im nachfolgenden Schritt 250 wird der Sensor 120, die Ansteuerung des Sensors 170 und/oder die Messwerte 160 auf Fehler bzw. hinsichtlich der Plausibilität der Daten überprüft. Stellt sich dabei eine Fehlfunktion heraus, wird auf Schritt 260 verwiesen, bei dem der Fahrer durch eine akustische und/oder optische Anzeige 115 über die Fehlfunktion des Sensors informiert wird. Weiterhin ist im Schritt 260 vorgesehen, dass die Fehlfunktion für spätere Wartungsarbeiten im Speicher 105 des Steuergeräts 100 abgespeichert wird. Nach der Information des Fahrers und dem Abspeichem im Speicher 105 wird der Algorithmus ohne weitere Ausführungen beendet. Wird in Schritt 250 jedoch keine Fehlfunktion des Sensors 120 festgestellt, so folgt im Schritt 270 eine Sicherung der neuen Betriebsparameter für weitere Messwertaufnahmen im Speicher 105 des Steuergeräts 100, bevor der Algorithmus beendet wird.

Neben der Durchführung des ersten Kalibrierungsschritts durch den Algorithmus in Schritt 220 kann der Grobabgleich auch über eine geeignete Wahl der Beschaltung des Sensors 120 bzw. des Operationsverstärkers, der die Ausgangssignale des Sensors 120 verstärkt, stattfinden. In diesem Fall wird lediglich der zweite Kalibrierungsschritt durch das Steuergerät 100 durchgeführt.

Eine weitere Ausführungsform der Erfindung findet ihre Anwendung beim Austausch eines Sensors und/oder des Steuergeräts beispielsweise nach einem aufgetretenen Defekt an einem der beteiligten Komponenten. Dabei steht für den zweiten Kalibrierungsschritt kein geeignetes Paar Referenzwerte zur Feinkalibrierung zur Verfügung, da der Austausch beispielweise in einer Werkstatt erfolgt und es keine Möglichkeit gibt, die Bremsanlage mit definierten Drücken zu versorgen. Um tretzdem eine Feinkalibrierung durchführen zu können, wird in diesem Fall nach dem Erkennen einer Kalibrierungsanforderung F_{I}=1 in Schritt 200 und der Grobkalibrierung des Sensors in Schritt 210 und Schritt 220, zur Erzeugung eines ersten Referenzwertes durch das Steuergerät in Schritt 230 ein Abbau des Drucks in der Bremsanlage initiiert. Dazu wird an das Drucksteuergerät 199 der Bremsanlage eine Aktivierung einer entsprechenden Ventilstellung/Sequenz weitergegeben, die dazu führt, dass im gesamten Bremskreislauf der Druck vollständig abgebaut wird. Um eine irrtümliche Bremsbetätigung zu verhindern, können Plausibilitätsabfragen durchgeführt werden. Durch den Abbau des Bremsdrucks im Bremskreislauf kann im Schritt 230 ein Messsignal des Sensors zum Referenzwert bei 0 bar erzeugt werden. Ausgehend von dem Messsignal, das der Sensor 120 bei diesem Referenzwert liefert, können nun im Schritt 240 Verstärkungswerte für den Sensor 120 bestimmt werden. Dies kann beispielsweise durch das Einlesen eines Datensatzes in Form eines Barcodes in den Speicher 105 des Steuergeräts durch den Techniker der Werkstatt geschehen. Alternativ dazu können die Verstärkungswerte aber auch einer Datenbank entnommen werden, die für jeden Sensor 120 die Feinabgleichwerte für die Verstärkung enthält. Diese Datenbank kann sich beispielsweise mit dem Speicher 140 sensornah direkt im Sensor 120 befinden oder aber als Teil des Steuergeräts 100 im Speicher 105 befinden. Letzteres bietet die Möglichkeit über ein externes Update die Verstärkerparameter aus dem ausgetauschten Steuergerät in das neu eingebaute Steuergerät zu überspielen. Dies hätte den Vorteil, dass auch Alterungseffekte während des Betriebs durch die ursprüngliche Ansteuerung des Sensors mit berücksichtigt werden können.

Die gleiche Routine kann jedoch auch durchgeführt werden, wenn das Steuergerät selbsttätig erkennt, dass eine neues System Sensor-Steuergerät vorliegt. Dies kann beispielsweise dadurch geschehen, dass das Steuergerät 100 die Betriebs- bzw. Ansteuerparameter 180 des Sensors 120 einliest und feststellt, dass bisher noch keine Ansteuerung stattgefunden hat. Auch können spezielle Betriebsparameter im Speicher 140 des Sensors 120 abgelegt sein, die eine Kodierung bzw. Seriennummer des Sensors 120 enthalten, so dass eine eindeutige Identifizierung der Ansteuerung möglich ist.

Der Start des Algorithmus' zur Kalibrierung kann dabei zu regelmäßigen Zeitpunkten oder aufgrund vorgebbarer Ereignisse stattfinden. Dabei ist sowohl eine separate Ansteuerung des Algorithmus für jeden Sensor aber auch eine Durchführung des Algorithmus' für einen Satz aus mehreren Sensoren denkbar.

Bei einem Drucksensor an den Radbremsen ist dabei zu berücksichtigen, dass die Kalibrierung beispielsweise nach dem Austausch eines Bauteils während eines Stillstands des Fahrzeugs durchgeführt wird, d.h. bei einer "Ruhephase" der Bremsen. Im Regelfall ist diese Kalibrierung jedoch nur unmittelbar nach dem Einbau oder Austausch eines Bauteils notwendig. Die Ansteuerung des Sensors durch die Testsignale, um Verstärkungsfehler oder Alterungseffekte zu erfassen, ist jedoch im Vergleich zur Kalibrierung auch während des normalen Betriebs des Fahrzeugs denkbar. Aber auch dabei ist darauf zu achten, dass die Ansteuerung zu Testzwecken nicht während einer normalen Ansteuerung der Radbremsen erfolgt.

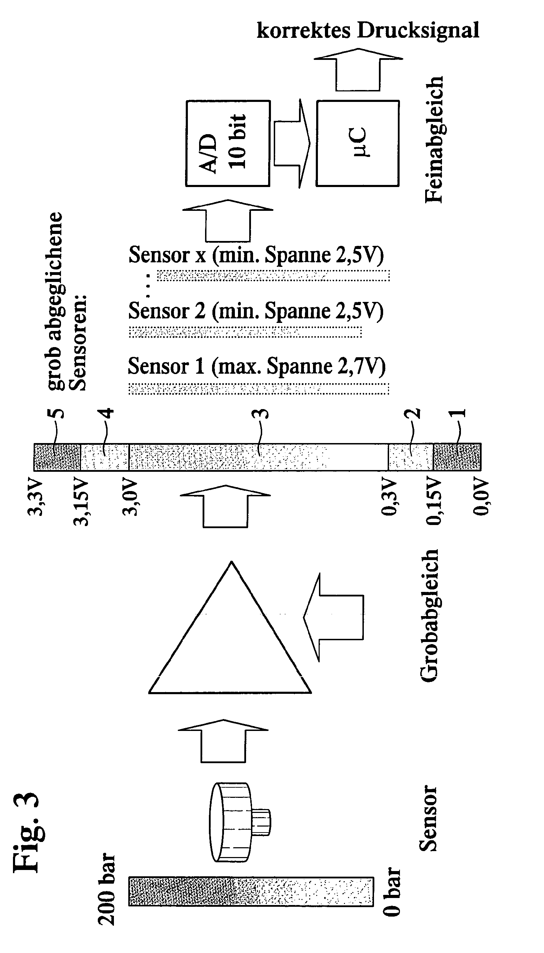

Zur Verdeutlichung der Erfindung ist abschließend in Figur 3 eine Übersicht über den zweitgeteilten Kalibrierungsvorgang bei mehreren Sensoren dargestellt. Wird die Erfindung auf einen Drucksensor angewandt, so ist beispielsweise gefordert, dass der Sensor einen Druckbereich von 0 bis 200 bar erfassen soll. Dabei kann beispielsweise als Drucksensor eine Metalldünnschicht-Messzelle verwendet werden, die eine hohe Temperaturkonstanz aufweisen und somit keinen Abgleich über die Temperatur erfordern. Die Verstärkung des Messsignals findet über einen Standard-Operationsverstärker mit geringer Offsetspannung statt. Durch eine geeignete Beschaltung des OP's wird im ersten Kalibrierungsschritt ein Grobabgleich erreicht. Wie in der Figur 3 beispielhaft dargestellt, werden die erfassten Druckgrößen als Spannungswerte zwischen 0,3 und 3,0 V dargestellt. Durch den Grobabgleich kann es dabei dazu kommen, dass einzelne Sensoren nicht den vollen Spannungsbereich 3 ausnutzen und den minimalen Druckwert (0 bar) bei höheren (Sensor 2) bzw. den maximalen Druckwert (200 bar) bei niedrigeren (Sensor x) Spannungswerten erfassen. Um diese Abweichungen zu kompensieren, wird in einem zweiten Kalibrierungsschritt im Steuergerät 100 die Spannungswerte mit einem A/D-Wandler erfasst und an einen Mikroprozessor weitergeleitet. In diesem Mikroprozessor wird daraufhin in Abhängigkeit geeignete Betriebs- und Ansteuerparameter der Sensoren ein Feinabgleich der einzelnen Sensoren mit dem Ziel durchgeführt, ein korrektes Drucksignal zu erzielen. Zu diesem Zweck können Testsignale bzw. -impulse in der Größenordnung von 0,15 V (Spannungsbereiche 2 und 4) an den Sensor bzw. OP angelegt werden. Weiterhin ist denkbar, einen Kurzschluß des Sensors oder OP's festzustellen. Dies kann beispielsweise dadurch geschehen, dass Spannungswerte im Bereich 1 oder 5 erfasst werden.

## Patentansprüche

1. Verfahren zur Messwertaufnahme mittels wenigstens eines Sensors (120, 121) und eines wenigstens den einen Sensor (120, 121) steuernden, insbesondere prüfenden, Steuergeräts (100) in einem Fahrzeug, wobei
- der Sensor (120, 121) Messgrößen erfasst und
- an das separate, d.h. räumlich vom Sensor getrennte Steuergerät (100) weiterleitet, **dadurch gekennzeichnet, dass** die Ansteuerung (180, 181) des Sensors (120, 121) in Abhängigkeit von den im Steuergerät (100) erfassten Messgrößen (170, 171) aus
- momentan und/oder
- vorhergehend
erfassten Messgrößen (170, 171) des Sensors (120, 121) erfolgt.

2. Verfahren nach Anspruch 1, **dadurch gekennzeichnet, dass** zur Messwertaufnahme eine Kalibrierung des Sensors (120, 121) vorgesehen ist, wobei die Kalibrierung in wenigstens zwei Schritten vorgesehen ist, wobei die Kalibrierung
- in einem ersten Schritt durch eine geeignete Wahl
- der Beschaltung des Sensors oder
- der Ansteuerung (180, 181) des Sensors (120, 121) mit Hilfe des Steuergeräts (100)
vorgesehen ist
und
- in einem zweiten Schritt in Abhängigkeit von den im Steuergerät erfassten Messgrößen (170, 171) erfolgt.

3. Verfahren nach Anspruch 1, **dadurch gekennzeichnet, dass** der Sensor (120, 121) wenigstens eine einen Druck repräsentierende Druckgröße erfasst, wobei insbesondere vorgesehen ist, dass der Sensor (120, 121) eine Druckgröße in einer Bremsanlage eines Fahrzeugs erfasst.

4. Verfahren nach Anspruch 1, **dadurch gekennzeichnet, dass** die vom Sensor erfassten Messgrößen im Steuergerät (100) verarbeitet werden.

5. Verfahren nach Anspruch 2, **dadurch gekennzeichnet, dass** die Kalibrierung zu wenigstens einem vorgebbaren Zeitpunkt erfolgt.

6. Verfahren nach Anspruch 2, **dadurch gekennzeichnet, dass** zur Kalibrierung die Erfassung wenigstens einer Messgröße des Sensors vorgesehen ist, wobei insbesondere vorgesehen ist, dass diese Messgröße einen Referenzwert zur Kalibrierung repräsentiert.

7. Verfahren nach Anspruch 6, **dadurch gekennzeichnet, dass** Ansteuerungsparameter (180, 181) des Sensors (120, 121), die vom Steuergerät (100) im zweiten Schritt der Kalibrierung ermittelt werden in einem nicht flüchtigen Speicher (105, 140, 141) abgespeichert werden, wobei insbesondere die Speicherung im Sensor (120) und/oder im Steuergerät (100) vorgesehen ist.

8. Verfahren nach Anspruch 1, **dadurch gekennzeichnet, dass** das Steuergerät (100) wenigstens
- einen Analog/Digital Wandler und
- einen Mikroprozessor
aufweist.

9. Vorrichtung zur Messwertaufnahme mittels wenigstens eines Sensors (120, 121) und eines wenigstens den einen Sensor (120, 121) steuernden Steuergeräts (100) in einem Fahrzeug, wobei
- der Sensor (120, 121) Messgrößen erfasst und
- an das separate Steuergerät (100) weiterleitet,
**dadurch gekennzeichnet, dass** die Ansteuerung (180, 181) des Sensors (120, 121) in Abhängigkeit von den im Steuergerät (100) erfassten Messgrößen (170, 171) aus
- momentan und/oder
- vorhergehend
erfassten Messgrößen (17'0, 171) des Sensors (120, 121) erfolgt.

10. Vorrichtung nach Anspruch 9, **dadurch gekennzeichnet, dass** zur Messwertaufnahme eine Kalibrierung des Sensors (120, 121) vorgesehen ist, wobei die Kalibrierung mit Hilfe der Ansteuerung (180, 181) des Sensors (120, 121) durch das Steuergerät (100) vorgesehen ist und die Kalibrierung
- in einem ersten Schritt in Abhängigkeit vorgegebener Betriebsparameter (190, 191) des Sensors und
- in einem zweiten Schritt in Abhängigkeit von den im Steuergerät erfassten Messgrößen (170, 171)
erfolgt.

11. Computerprogramm mit Programmcodemitteln, um alle Schritte eines Verfahrens nach einem der Ansprüche 1 bis 8 durchzuführen, wenn das Computerprogramm auf einem Computer oder einer entsprechenden Recheneinheit, insbesondere einer Recheneinheit in einer Vorrichtung nach Anspruch 9 oder 10, durchgeführt wird.

12. Computerprogrammprodukt mit Programmcodemitteln, die auf einem computerlesbaren Datenträger gespeichert sind, um ein Verfahren nach einem der Ansprüche 1 bis 8 oder einer entsprechenden Recheneinheit, insbesondere eine Recheneinheit in einer Vorrichtung gemäß Anspruch 9 oder 10, durchzuführen.
